# EUROPÄISCHE PATENTSCHRIFT

(11) **EP 3 435 648 B1**
(45) Veröffentlichungstag und Bekanntmachung des Hinweises auf die Patenterteilung: **03.06.2020**
(21) Anmeldenummer: 17183794.1
(22) Anmeldetag: 28.07.2017
(51) Int. Cl.: H04N 1/00, G06F 3/12, H04N 1/54, H04N 1/60

(54) **VORRICHTUNG UND VERFAHREN ZUM ERSTELLEN EINES DIGITALEN DRUCKBILDES**
DEVICE AND METHOD FOR PRODUCING A DIGITAL PRINTED IMAGE
DISPOSITIF ET PROCÉDÉ DE GÉNÉRATION D'UNE IMAGE D'IMPRESSION NUMÉRIQUE

(43) Veröffentlichungstag der Anmeldung: 30.01.2019
(73) Patentinhaber: Schiestl, Angelo, 6336 Langkampfen (AT)
(72) Erfinder: Schiestl, Angelo, 6336 Langkampfen (AT)
(74) Vertreter: Wunderlich & Heim Patentanwälte Partnerschaftsgesellschaft mbB

(56) Entgegenhaltungen:
- EP-A1- 0 878 956
- DE-A1- 19 922 940
- DE-A1-102005 014 152
- US-A1- 2004 141 192
- US-A1- 2008 218 776

## Beschreibung

Die Erfindung betrifft ein Drucksystem zum Erstellen eines digitalen Druckbildes, insbesondere auf einem Textil, gemäß dem Oberbegriff des Anspruchs 1 und ein Verfahren zum Erstellen eines digitalen Druckbildes, insbesondere auf einem Textil, gemäß dem Oberbegriff des Anspruchs 8.

Eine solche Vorrichtung weist einen Datenserver, welcher ausgebildet ist, Bilddaten eines Druckauftrags zu empfangen, mindestens eine Druckvorrichtung mit mindestens einem digitalen Druckkopf, insbesondere einem Inkjet-Druckkopf, welcher ausgebildet ist, mindestens eine Druckdatei für einen Druckauftrag zu empfangen und zu drucken, und ein erstes Rasterbild-Prozessormodul auf, welches auf dem Datenserver vorgesehen ist und ausgebildet ist, die empfangenen Bilddaten des Druckauftrags als ein umgewandeltes Dateiformat bereitzustellen, welches von der Druckvorrichtung lesbar und in Form eines Druckbildes verarbeitbar ist, wobei die Bilddaten in dem umgewandelten Dateiformat auf dem Datenserver an die Druckvorrichtung übermittelbar sind.

Die US 2004/141192 A1 offenbart ein Drucksystem mit einem ersten und einem zweiten RIP-Modul, wobei das erste RIP-Modul druckerlesbare Signale erzeugt und das zweite Modul eine geräteunabhängige Version dieser Signale erzeugt.

Die US 2008/218776 A1 offenbart eine Vorrichtung zur Nachbearbeitung von Bilddateien vor einem Bedrucken, welche mit einer Darstellungseinrichtung der angepassten Druckbilddatei ausgebildet ist.

Bei einem solchen Verfahren werden Bilddaten für einen Druckauftrag an einen Datenserver gesendet, die gesendeten Bilddaten mittels eines ersten Rasterbild-Prozessormoduls in ein Dateiformat umgewandelt, welches von mindestens einer Druckeinrichtung mit mindestens einem digitalen Druckkopf, insbesondere einem Inkjet-Druckkopf, lesbar und in Form eines Druckbildes verarbeitbar ist, und die Bilddaten in dem umgewandelten Dateiformat an die Druckeinrichtung übermittelt.

In der digitalen Drucktechnik werden regelmäßig digital hinterlegte Druckaufträge für beispielsweise ein zu erstellendes Druckbild auf einem Textil generiert. Diese Bilddaten können aus den unterschiedlichsten Quellen stammen und weisen demnach kein einheitliches Format auf, nach welchem ein digitaler Drucker in der Lage wäre, die Bilddaten in Form von Bildpunkten auf einer Druckoberfläche abzubilden.

Daher ist üblicherweise ein sogenanntes Rasterbild-Prozessormodul beziehungsweise ein Rastergrafik-Prozessor (RIP-Prozessor) vorgesehen, welcher die von einem Benutzer erstellten Bilddateien, insbesondere eine Bilddatei in eine druckerlesbare Form umwandelt.

Die Umwandlungsprozesse in dem Rasterbild-Prozessormodul sind neben der Druckmaschine selbst die wichtigste und zugleich fehleranfälligste Komponente im Druckprozess. Die Umwandlung der Bilddaten in dem Rasterbild-Prozessormodul ist druckerspezifisch durchzuführen, da die Schreibcharakteristik des zu verwendenden Druckers bei Herstellung der Drucker-Bitmap zu berücksichtigen ist. Das Rendering n dem Rasterbild-Prozessormodul enthält daher die Attribute des Druckers selbst mit den zu druckenden Bilddaten. Diese Druckerspezifizität im RIP-Ausgang kann zu Problemen führen, wenn die RIP-Ausgabe an einen, insbesondere elektrografisch, anders ausgestalteten Drucker weitergeleitet wird. Eines der dabei entstehenden Probleme kann beispielsweise sein, dass das zu druckende Bild entweder dunkler oder heller sein wird als das, was auf dem Drucker gedruckt würde, für den das ursprüngliche RIP durchgeführt wurde.

Solche Abweichungen sind jedoch in der Regel erst nach dem Drucken des Druckbildes ersichtlich, was zu erhöhten Druckkosten, insbesondere bei der Verwendung wechselnder Drucker führen kann.

Die vorliegende Erfindung stellt sich daher die **Aufgabe**, ein Drucksystem und ein Verfahren zum Erstellen eines digitalen Druckbildes bereitzustellen, mit welchen auch bei wechselndem Einsatz von, insbesondere elektrografisch, unterschiedlichen Druckern ein wirtschaftlicher Betrieb des Drucksystems ermöglicht ist.

Erfindungsgemäß wird die Aufgabe durch ein Drucksystem gemäß dem Anspruch 1 sowie ein Verfahren gemäß dem Anspruch 7 gelöst.

Bevorzugte Ausführungsformen der vorliegenden Erfindung sind in den abhängigen Ansprüchen angegeben.

Das erfindungsgemäße Drucksystem ist dadurch gekennzeichnet, dass die mindestens eine Druckvorrichtung ein zweites Rasterbild-Prozessormodul aufweist, mittels welchem die Bilddaten in dem umgewandelten Dateiformat vor dem Drucken eines entsprechenden Druckbilds druckerspezifisch anpassbar sind.

Ein erster Grundgedanke der vorliegenden Erfindung besteht darin, insbesondere ortsunabhängig voneinander, neben einem ersten Rasterbild-Prozessormodul, welches insbesondere an einem Datenserver vorgesehen ist, direkt an mindestens einer Druckvorrichtung jeweils ein zweites Rasterbild-Prozessormodul vorzusehen, welches insbesondere auch die Eigenschaften des Druckers, an welchem das zweite Rasterbild-Prozessormodul vorgesehen ist, angepasst ist. Hierdurch kann insbesondere an der Übermittlung von fehlerhaft oder mangelhaft umgewandelten Bilddaten an die Druckvorrichtung eine Korrektur der übermittelten, umgewandelten Bilddaten direkt an der Druckvorrichtung vorgenommen werden. Dies kann beispielsweise automatisch durch das zweite Rasterbild-Prozessormodul durchgeführt werden und/oder die Bilddaten durch einen Benutzer an der Druckmaschine weiteren Anpassungen unterzogen werden.

Bei dem Rasterbild-Prozessormodul kann es sich um eine spezielle Software, Hardware oder eine Kombination aus Hardware und Software handeln, die spezifische Daten einer höheren Seitenbeschreibungssprache, beispielsweise Postscript, PDF oder PCL in eine Rastergrafik umrechnet, um diese in der Regel anschließend auf einem Drucker auszugeben.

Der erfindungsgemäße Datenserver kann grundsätzlich jede Einrichtung sein, von welcher aus ein Druckauftrag beziehungsweise ein Druckbefehl an einen digitalen Drucker übermittelbar ist, wobei die Einrichtung das erste Rasterbild-Prozessormodul aufweist. Hierbei kann es sich insbesondere um einen Server handeln, welcher Druckaufträge für eine Vielzahl von Druckeinrichtungen verwaltet, Computer oder auch mobile Geräte, wobei jede der Einrichtungen, welche einen erfindungsgemäßen Datenserver darstellt, mindestens einen Prozessor zum Empfang und zur Verarbeitung eines Druckauftrags aufweist und vorzugsweise mit einem Speichermodul ausgebildet ist, welches zumindest das Zwischenspeichern des Druckauftrags ermöglicht.

Das Empfangen eines Druckauftrags gemäß der vorliegenden Erfindung umfasst zum einen, dass der Datenserver einen Druckauftrag von einer unabhängigen Quelle, beispielsweise über ein Netzwerk, das Internet oder ein externes Speichermedium erreicht und verarbeitbar hinterlegt wird. Das Empfangen eines Druckauftrags umfasst jedoch auch solche Druckaufträge, welche direkt an den Datenserver erstellt wurden, wobei das Empfangen durch die Eingabe des Druckauftrages eines Benutzers an dem Datenserver dargestellt ist.

Ein Druckauftrag kann jede Datei oder mehrere Dateien oder Daten beziehungsweise Informationen sein, welche, insbesondere nach der Umwandlung in dem ersten Rasterbild-Prozessormodul, als durch einen digitalen Drucker lesbare Druckdaten beziehungsweise Druckdatei(en) den Drucker in die Lage versetzt, eine beliebige Oberfläche mit einem digitalen Druckbild zu versehen. Gemäß der vorliegenden Erfindung ist ein Rasterbild-Prozessormodul jede Software und/oder Hardware, welche ausgebildet ist, Bilddaten eines Druckauftrags in eine für einen digitalen Drucker lesbares und in ein Druckbild umsetzbares Dateiformat umzuwandeln beziehungsweise zu rendern.

Die Übermittlung der umgewandelten Bilddaten von dem Datenserver an die Druckeinrichtung kann sowohl direkt, beispielsweise über ein Netzwerk oder eine direkte, zum Beispiel serielle, datenelektronische Anbindung der Druckeinrichtung an den Datenserver erfolgen. Zusätzlich oder alternativ kann eine Übermittlung der umgewandelten Bilddaten auch indirekt, beispielsweise über ein eine Einrichtung, insbesondere ein Modul, eine Software oder einen weiteren Server, erfolgen, welche vorzugsweise ausgebildet ist, umgewandelte Bilddaten einzelnen Druckeinrichtungen zuzuordnen. Das erfindungsgemäß vorgesehene zweite Rasterbild-Prozessormodul ist erfindungsgemäß ausgebildet, selbstständig und/oder basierend auf der Eingabe eines Benutzers Bilddaten für eine Ausgabe an dem jeweiligen Drucker in Form eines Druckbildes zu optimieren beziehungsweise anzupassen.

Nach einer Weiterbildung der vorliegenden Erfindung ist es vorgesehen, dass die Druckeinrichtung Wiedergabemittel aufweist, welche ausgebildet sind, die übermittelten Bilddaten in dem umgewandelten Dateiformat grafisch und/oder numerisch als vorläufig zu erwartendes Druckbild darzustellen. Die Wiedergabemittel können beispielsweise einen Bildschirm aufweisen, sind jedoch nicht darauf beschränkt. Auf dem Bildschirm können das zu erwartende Druckbild grafisch dargestellt werden und/oder Daten zu Bildparametern, wie beispielsweise Kontrast, Helligkeit, Bildschärfe, Rasterung, Auflösung, Dimensionierung, Trapping und/oder Farbtrennung wiedergegeben sein. Besonders bevorzugt ist das Wiedergabemittel mit einem Grafikprozessor verbunden, welcher das zu druckende Druckbild in besonders hoher Farbtreue auf dem Wiedergabemittel widergibt, wodurch der Benutzer in die Lage versetzbar sein kann, entsprechende Anpassungen zur optimierten Wiedergabe des Druckbildes auf der zu bedruckenden Oberfläche vorzunehmen. Die grafische Darstellung des zu erwartenden Druckbildes kann demnach erfindungsgemäß eine elektronische grafische Wiedergabe des zu erwartenden Druckergebnisses auf der bedruckten Oberfläche auf den Wiedergabemittel mit hoher Farbtreue darstellen.

Nach einer besonders bevorzugten Weiterbildung der vorliegenden Erfindung ist es vorgesehen, dass die Druckeinrichtung Eingabemittel für einen Benutzer und Verarbeitungsmittel aufweist, mittels welchen mindestens ein Befehl an das zweite Rasterbild-Prozessormodul zur druckerspezifischen Anpassung der übermittelten Bilddaten eingebbar und übermittelbar ist. Grundsätzlich kann das zweite Rasterbild-Prozessormodul ausgebildet sein, druckerspezifische Anpassungen der übermittelten Bilddaten eigenständig vorzunehmen. Da es sich jedoch bei der Bearbeitung durch das zweite Rasterbild-Prozessormodul um eine Postverarbeitungs-Nachbearbeitung der umgewandelten Bilddaten handeln kann, kann es nach der erfindungsgemäßen Weiterbildung vorgesehen sein, dass der Benutzer die Möglichkeit erhält, insbesondere basierend auf den durch den Benutzer erfassten Aussehen und/oder Daten zu dem erwartenden Druckbild mittels der Wiedergabemittel, Anpassungen der voranstehend beschriebenen Bildeigenschaften (Kontrast, Schärfe, ...) vornehmen zu können. Hierzu können beispielsweise eine Tastatur, eine Maus oder ein anderes zweckdienliches Eingabemittel zur Korrektur und/oder Veränderung der Eigenschaften der übermittelten Bilddaten vorgesehen sein. Die durch den Benutzer vorgenommenen Anpassungen an den übermittelten Bilddaten können durch das zweite Rasterbild-Prozessormodul in die übermittelten Bilddaten beispielsweise implementiert und druckereinrichtungslesbar verarbeitet werden.

Besonders zweckmäßig ist es nach einer Weiterbildung der vorliegenden Erfindung, dass die Wiedergabemittel ausgebildet sind, vor Ausführung des mindestens einen Befehls zur druckerspezifischen Anpassung der übermittelten Bilddaten, das nach der Anpassung zu erwartende Druckbild darzustellen. Insbesondere um es dem Benutzer zu ermöglichen, eine qualitätsorientierte Anpassung der übermittelten Bilddaten an die Druckeinrichtung vorzunehmen, kann es vorteilhaft sein, dass die von dem Benutzer vorgenommenen Änderungen auch auf den Wiedergabemitteln vorzugsweise direkt grafisch und/oder numerisch darstellbar sind. Hierdurch kann der Benutzer in die Lage versetzt werden, eine besonders genaue Anpassung der übermittelten Bilddaten an die Druckeinrichtung vorzunehmen. Besonders vorteilhaft kann hierbei eine gleichzeitige Vorher-Nachherdarstellung sein, bei welcher sowohl die eingegangenen übermittelten Bilddaten, als auch die angepassten übermittelten Bilddaten nebeneinander, vorzugsweise grafisch, darstellbar sind, wodurch eine Verbesserung des Druckbildes direkt ersichtlich wird.

Nach einer besonders zweckmäßigen Weiterbildung der vorliegenden Erfindung ist es vorgesehen, dass das zweite Rasterbild-Prozessormodul ausgebildet ist, basierend auf dem mindestens einen übermittelten Befehl einen Kontrast, eine Helligkeit, eine Bildschärfe, eine Rasterung, eine Auflösung, eine Dimensionierung des zu druckenden Druckbildes, ein Trapping, eine Farbtrennung und/oder eine Open-Prepress-Interface-Bildsetzung der übermittelten Bilddaten anzupassen. Grundsätzlich kann das zweite Rasterbild-Prozessormodul ausgebildet sein, jede für ein zu druckendes Druckbild relevante Kenngröße in den übermittelten Bilddaten anzupassen.

Erfindungsgemäß kann die Dimensionierung des zu druckenden Druckbildes insbesondere die Länge und Breite des Druckbereichs auf der zu bedruckenden Oberfläche, insbesondere dem Textil darstellen.

Erfindungsgemäß umfasst das Trapping sowohl das Überfüllen als auch das Einstellen des Druckers auf eine Farbannahmefähigkeit einer nachfolgenden Druckerfarbe, insbesondere beim Nass-in-Nassdruck.

Das Überfüllen bezeichnet eine Methode beziehungsweise ein Verfahren innerhalb des Reproduktionsprozesses für alle Druckverfahren, das für ein qualitativ hochwertiges Druckerzeugnis notwendig ist. Wenn in einem Druckverfahren mehrere Farben einzeln und nacheinander übereinander gedruckt werden, dann ist das Substrat stets in der Druckanlage optimal ausgerichtet. Allenfalls können an der Grenzlinie zweier Druckfarben weiße Ränder oder Löcher, sogenannte Blitzer, entstehen. Um der in der Praxis oft nicht optimalen Ausrichtung der zu bedruckenden Oberfläche entgegenzuwirken wird das Überfüllen verwendet, wobei, um ein Objekt mit einer helleren Farbe, beispielsweise mit einer dünne Linie überdruckt wird, so dass sich die Grenzflächen minimal überlappen. Hierdurch können kleine Ausrichtungsfehler kompensiert werden, solange die Verschiebung nicht größer als der Überlappungsbereich ist.

Als Farbtrennung bezeichnet man das Erreichen einzelner Druckfarben, meist in der Druckvorstufe. Die Farbseparation ist notwendig, weil Farbinformationen meist nicht in der Form vorliegen, wie sie für den Druck benötigt werden. Jede der Farben eines beliebigen Bildpunktes kann beispielsweise aus den Grundfarben Rot, Grün, Blau (RGB) oder Cyan, Magenta, Gelb und Schwarz (CMG) gemischt werden. Hierbei wird der Bildpunktanteil jeder der verwendeten Farbe berechnet und das Druckbild als eigenes Teilbild, welches lediglich aus Bildpunkten einer Farbe mit unterschiedlichem Anteil der Farbe an dem jeweiligen Bildpunkt besteht, hinterlegt. Durch Übereinanderlegen der drei (RGB) beziehungsweise vier (CMG) Teilbilder wird das fertige Druckbild erstellt.

Bei der open-press-interface-Bildsetzung werden zwei Kopien des zu erstellenden Druckbildes generiert. Die eine Kopie hat die hohe Auflösung des Druckbildes, wohingegen die andere Kopie eine niedrigere Auflösung aufweisen kann. Insbesondere zur Darstellung von sogenannten "thumb nails", also einer Miniaturansicht des zu druckenden Bildes oder zur schnellen Übermittlung von vorläufigen Druckbildinformationen kann die Bilddruckdatei mit niedriger Auflösung schneller bereitgestellt werden als die Druckbilddatei mit der hohen Auflösung.

Nach einer bevorzugten Weiterbildung der Erfindung ist es vorgesehen, dass die Druckvorrichtung ausgebildet ist, die durch das zweite Rasterbild-Prozessormodul angepassten Bilddaten zu drucken. Sind die von dem Datenserver übermittelten Bilddaten passend zu der Druckeinrichtung, kann ein direktes Drucken auch ohne eine weitere Bearbeitung durch das zweite Rasterbild-Prozessormodul erfolgen. Sollte eine Nachbearbeitung der übermittelten Bilddaten notwendig sein, um die umgewandelten Bilddaten auf die Druckeinrichtung anzupassen, kann das Druckbild nach Beendigung der Anpassung durch das zweite Rasterbild-Prozessormodul auf der zu bedruckenden Oberfläche aufgedruckt werden. Das Druckbild besteht hierbei vorzugsweise aus einzelnen diskreten Tintentröpfchen vor dem mindestens einen Druckkopf, welche gemeinsam das Druckbild auf der Oberfläche darstellen.

Nach einer besonders zweckmäßigen Weiterbildung der Erfindung ist es vorgesehen, dass das zweite Raster-Prozessormodul ausgebildet ist, vor dem Anpassen der übermittelten Bilddaten diese in ein anpassbares Dateiformat umzuwandeln. Grundsätzlich ist das zweite Rasterbild-Prozessormodul ausgebildet, die übermittelten, umgewandelten Bilddaten direkt eigenständig oder basierend auf durch einen Benutzer eingegebenen Befehl an die Druckeinrichtung anzupassen. Sollten einzelne Anpassungen in der bereits umgewandelten Form der Bilddaten nicht ermöglicht sein, ist das zweite Rasterbild-Prozessmodul ausgebildet, die Bilddaten in ein anpassbares Dateiformat umzuwandeln und an die Rahmenbedingungen der Druckeinrichtung anzupassen und anschließend in eine für die Druckeinrichtung lesbares Dateiformat (rück-) umzuwandeln.

Das erfindungsgemäße Verfahren zum Erstellen eines digitalen Druckbildes ist dadurch gekennzeichnet, dass die an die Druckeinrichtung übermittelten, umgewandelten Bilddaten an der Druckeinrichtung eines zweiten Rasterbild-Prozessormoduls vor dem Drucken eines entsprechenden Druckbilds druckerspezifisch angepasst werden.

Nach einem zweiten Grundgedanken der vorliegenden Erfindung wird an einer Druckeinrichtung, an welche Bilddaten gesendet wurden, diese durch einen Benutzer und/oder ein Rasterbild-Prozessormodul auf seine Kompatibilität mit der Druckeinrichtung überprüft. Bei einer Abweichung, insbesondere von den elektrographischen, Eigenschaften des Druckers, wird eine entsprechende Anpassung der Bilddaten vorgenommen, wodurch eine Änderung, insbesondere eine Optimierung der Darstellung des Bildes auf der bedruckten Oberfläche, insbesondere hinsichtlich eines Kontrastes, einer Helligkeit, einer Bildschärfe, einer Rasterung in der übermittelten Bilddatei, einer Auflösung, einer Dimensionierung des zu druckenden Druckbildes, eines Trappings, einer Farbtrennung und/oder eines Open-Prepress-Interface Bildsetzung vorgenommen werden kann.

Nach einer besonders bevorzugten Weiterbildung der Erfindung ist es vorgesehen, dass an der Druckeinrichtung Wiedergabemittel vorgesehen sind, mittels welchen die übermittelten Bilddaten in dem umgewandelten Dateiformat graphisch und/oder numerisch als vorläufiges zu erwartende Druckbild dargestellt werden. Die Wiedergabemittel können insbesondere einen Bildschirm mit hoher Farbtreue aufweisen, auf welchem das zu druckende Druckbild dargestellt wird. Da die Darstellung eines Druckbildes auf einem Bildschirm von dem tatsächlichen Druckbild grundsätzlich abweichen kann, kann über die Wiedergabemittel lediglich ein zu erwartendes Druckbild und nicht das Druckbild selbst dargestellt werden. Grundsätzlich können die Wiedergabemittel ausgebildet sein, einen Benutzer in die Lage zu versetzen, Entscheidungen hinsichtlich einer nachträglichen Anpassung der übermittelten umgewandelten Bilddaten, insbesondere eine Optimierung des Druckbildes, vorzunehmen.

Besonders bevorzugt ist es nach einer Weiterbildung der Erfindung, dass mindestens ein Befehl an das zweite Rasterbild-Prozessormodul zur druckerspezifischen Anpassung der übermittelten Bilddaten über Eingabemittel für einen Benutzer eingegeben und über Verarbeitungsmittel übermittelt werden. Über die Eingabemittel kann eine Eingabe eines Benutzers erfolgen, wodurch die übermittelten Bilddaten, insbesondere für ein optimiertes Druckbild, angepasst werden können. Die Verarbeitungsmittel können insbesondere einen Prozessor aufweisen, der ausgebildet ist, die Eingabe des Benutzers in eine für das zweite Rasterbild-Prozessormodul lesbare Anweisung zur Anpassung der übermittelten Bilddaten zu übersetzen.

Besonders zweckmäßig ist es nach einer Weiterbildung der Erfindung, dass mittels der Wiedergabemittel vor Ausführung des mindestens einen Befehls zur druckerspezifischen Anpassung der übermittelten Bilddaten das nach der Anpassung zu erwartende Druckbild dargestellt wird. Insbesondere bei einer Anpassung durch den Benutzer kann es zweckmäßig sein, dass die durchgeführten Änderungen, vorzugsweise in Echtzeit, auf den Wiedergabemitteln dargestellt werden können. Besonders bevorzugt kann hierbei eine Vorher-Nachher-Darstellung, insbesondere in Echtzeit erfolgen, welche dem Benutzer den Effekt seiner Optimierung auf das zu erzeugende Druckbild anzeigt. Die Wiedergabemittel können die durchgeführten Anpassungen durch den Benutzer auch in Form von numerischen Angaben, vorzugsweise in Echtzeit, darstellen.

Nach einer besonders bevorzugten Weiterbildung der Erfindung ist es vorgesehen, dass ein Kontrast, eine Helligkeit, eine Bildschärfe, eine Rasterung, eine Auflösung, eine Dimensionierung des zu druckenden Druckbildes, ein Trapping, eine Farbtrennung und/oder eine Open-Prepress-Interface-Bildsetzung der übermittelten Bilddaten basierend auf den übermittelten Befehlen durch das zweite Rasterbild-Prozessormodul angepasst wird. Grundsätzlich kann das zweite Rasterbild-Prozessormodul eine Anpassung der übermittelten Bilddaten zur optimierten Darstellung des Druckbildes auf der zu bedruckenden Oberfläche eigenständig, insbesondere automatisch, vornehmen. Hierzu erkennt das Modul nach zuvor bestimmten Regeln eine Änderung des umgewandelten Druckbildes von den Eigenschaften des Druckers und kann diese nachträglich auch an die Druckeinrichtung anpassen. Zusätzlich oder alternativ hierzu kann es jedoch vorgesehen sein, dass ein Benutzer in die Optimierung der übermittelten Bilddaten aktiv eingreift. Hierbei kann es besonders vorteilhaft sein, insbesondere die voranstehenden Eigenschaften der übermittelten Bilddaten des zu druckenden Druckbildes anzupassen. Grundsätzlich kann das zweite Rasterbild-Prozessormodul ausgebildet sein, jede für eine Optimierung des Druckbildes notwendige Anpassung der übermittelten Druckdaten vorzunehmen.

Besonders bevorzugt ist es nach einer Weiterbildung der Erfindung, dass die angepassten Bilddaten durch den mindestens einen Druckkopf der Druckvorrichtung zu einem Druckbild umgesetzt werden. Insbesondere nach einer Anpassung der Bilddaten durch das zweite Rasterbild-Prozessormodul durch eigenständige oder benutzergesteuerte Eingabe, kann die Druckvorrichtung die übermittelten, angepassten Bilddaten zur Erzeugung eines Druckbildes auf einer Oberfläche verwenden. Generell ist die Druckvorrichtung ausgebildet, auch Bilddaten zu drucken, welche an die Druckvorrichtung übermittelt, jedoch nicht einer weiteren Anpassung durch das zweite Rasterbild-Prozessormodul unterzogen wurden. Grundsätzlich können Druckvorrichtung und Druckeinrichtung gleichbedeutend sein.

Nach einer Weiterbildung der vorliegenden Erfindung ist es vorgesehen, dass vor dem Anpassen der übermittelten Bilddaten diese, vorzugsweise durch das zweite Rasterbild-Prozessormodul, an der Druckvorrichtung in ein anpassbares Dateiformat umgewandelt werden. Die durch das erste Rasterbild-Prozessormodul umgewandelten Bilddaten können direkt durch das zweite Rasterbild-Prozessormodul angepasst werden. Alternativ oder ergänzend hierzu können die an die Druckeinrichtung übermittelten Bilddaten vor einer Anpassung zunächst in ein anderes Dateiformat umgewandelt werden, welches für eine Bearbeitung durch das zweite Rasterbild-Prozessormodul besonders geeignet ist. Die Umwandlung kann durch das Rasterbild-Prozessormodul oder durch eine andere Einrichtung, insbesondere durch eine andere prozessorgesteuerte Software, durchgeführt werden.

Die Umwandlung in ein anpassbares Dateiformat kann sowohl vor einer Anpassung durch das zweite Rasterbild-Prozessormodul, während oder anschließend geschehen, je nachdem, welche Optimierungen beziehungsweise Anpassungen an den übermittelten Bilddaten für eine optimierte Darstellung des Druckbildes auf der zu bedruckenden Oberfläche notwendig erscheinen.

In der Zeichnung wird nachfolgend die Erfindung weiter erläutert. In der Figur zeigt:

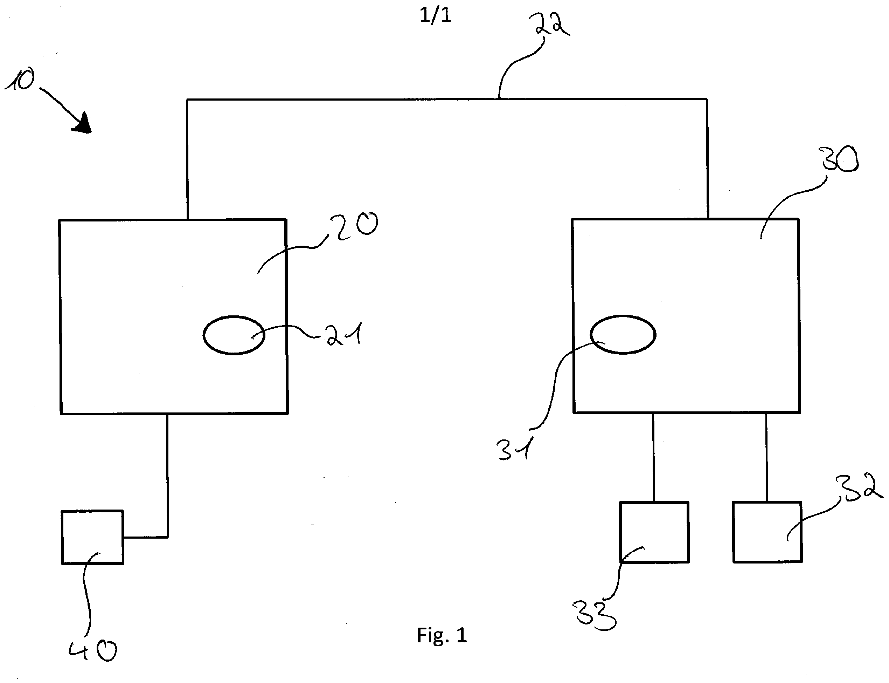

Figur 1 eine schematische Darstellung des erfindungsgemäßen Drucksystems.

Figur 1 zeigt eine schematische Darstellung des erfindungsgemäßen Drucksystems 10. Dieses weist zum einen einen Datenserver 20 und zum anderen eine Druckvorrichtung 30 auf, welche über eine Datenverbindung 22 miteinander verbunden sein können und über welche der Datenserver 20 Druckdaten, insbesondere in von der Druckvorrichtung 30 lesbarer Form, an die Druckvorrichtung 30 übermitteln kann. Der Datenserver 20 ist mit einem ersten Rasterbildprozessormodul 21 ausgebildet, welcher vom Datenserver empfangene Druckaufträge in einen für einen Drucker, insbesondere für einen digitalen Drucker, lesbares Dateiformat umwandelt. Der Datenserver 20 kann hierbei als klassischer Servereinheit, Computer oder aber auch als mobiles Gerät, wie beispielsweise ein Mobiltelefon oder ein Tablet ausgebildet sein. Die zu empfangenden Druckaufträge können von einer externen Quelle 40 an den Datenserver übermittelt werden. Grundsätzlich ist es jedoch auch denkbar, dass direkt die Eingabe eines Druckbefehls am Datenserver 20 durch einen Benutzer erfolgt, beispielsweise mittels einer Tastatur, einer Maus, eines externen Datenträgers, wie beispielsweise eines USB-Speichers oder ähnlichem, wobei die Übermittlung des Druckauftrags an den Datenservers durch Eingabe des Druckauftrags an dem Datenserver verwirklicht sein kann.

Die empfangenen Druckdaten werden von einem Rasterbild-Prozessormodul 21 in ein für die Druckeinrichtung 30 lesbares Dateiformat umgewandelt und kann über die Datenverbindung 22 an die Druckeinrichtung übermittelt werden. Bei der Datenverbindung 22 kann es sich um eine direkte, beispielsweise eine Netzwerkwerkverbindung oder eine Kommunikation über eine serielle Verbindung handeln. Zusätzlich kann die Datenverbindung 22 indirekt erfolgen, beispielsweise über das Internet oder über zwischengeschaltete Einrichtungen und Zwischenserver, welche ausgebildet sein können, den Druckauftrag einer spezifischen Druckvorrichtung 30 zuzuordnen. Grundsätzlich kann das Drucksystem 10 mit einer Vielzahl von Druckeinrichtungen 30 ausgebildet sein, wobei der Datenserver ein einheitliches Rasterbild-Prozessormodul 21 aufweisen kann. Aufgrund der druckeinrichtungspezifischen Umwandlung beziehungsweise Rendering der Druckdaten kann es erforderlich sein, dass die durch das Rasterbild-Prozessormodul 21 umgewandelten Bilddaten für die Druckvorrichtung 30 einer weiteren Anpassung bedürfen, um ein möglichst hochwertiges Druckbild zu gewährleisten. Hierbei können die in einer indirekten Datenverbindung 22 vorgesehenen Einrichtungen, beispielsweise einem Zwischenserver ausgebildet sein, eine Vorauswahl zu treffen und die umgewandelten Bilddaten einer passenden Druckvorrichtung 30 zuzuleiten. Zusätzlich ist die mindestens eine Druckvorrichtung 30 mit einem zweiten Rasterbild-Prozessormodul 31 ausgebildet, mittels welchem die umgewandelten, übermittelten Bilddaten vor der Verarbeitung eines Druckbilds, also vor einem Bedrucken einer Oberfläche, druckerspezifisch anpassbar sein können. Hierbei kann insbesondere eine Anpassung des Kontrasts, der Helligkeit, der Bildschärfe, der Rasterung, der Auflösung, der Dimensionierung des zu druckenden Bildes, ein Trapping, eine Farbtrennung und/oder eine Open-Prepress-Interface-Bildsetzung der übermittelten Bilddaten vorgenommen werden. Das zweite Rasterbild-Prozessormodul 31 kann grundsätzlich ausgebildet sein, Anpassungen der übermittelten umgewandelten Bilddaten selbständig vorzunehmen. Alternativ oder ergänzend hierzu kann eine Einrichtung 32 mit Eingabemitteln vorgesehen sein, welche es einem Benutzer erlauben, nachträglich Anpassungen an dem übermittelten, umgewandelten Bilddaten vorzunehmen. Vorzugsweise ist hierbei die Druckeinrichtung mit Wiedergabemitteln 33 ausgebildet, welche eine nummerische oder graphische Darstellung des übermittelten und/oder des zu erwartenden angepassten Druckbildes darstellen kann.

Vorzugsweise werden auf den Wiedergabemitteln 33 die durchgeführten Änderungen eines zu erwartenden Druckbildes in Echtzeit wiedergegeben, wodurch der Benutzer in die Lage versetzt werden kann, eine besonders genaue Anpassung des Druckbildes vorzunehmen. Vorzugsweise kann eine Vorher-Nachherdarstellung nebeneinander der übermittelten Bilddaten und der angepassten Bilddaten erfolgen, wodurch die durchgeführten Anpassungen besonders plastisch für einen Benutzer darstellbar sind.

Die über die über die Einrichtung 32 eingegebenen Befehle zur Anpassung des übermittelten Druckbildes können insbesondere nach entsprechender Verarbeitung durch einen entsprechenden Prozessor, durch das zweite Rasterbild-Prozessormodul eine für die Druckeinrichtung 30 angepasste Form der umgewandelten Bilddaten bearbeitet beziehungsweise gerendert werden.

Grundsätzlich ist das Drucksystem 10 ausgebildet, die durch das Rasterbild-Prozessormodul 21 umgewandelten Bilddaten mittels der Druckvorrichtung 30 direkt zu drucken, falls die umgewandelten Bilddaten zu der Druckvorrichtung passend umgewandelt/gerendert wurden.

## Patentansprüche

1. Drucksystem (10) zum Erstellen eines digitalen Druckbildes, insbesondere auf einem Textil, mit
einem Datenserver (20), welcher ausgebildet ist, Bilddaten eines Druckauftrags über ein Netzwerk, das Internet, von einem externen Speichermedium oder in Form eines direkt am Datenserver erstellten Druckauftrags zu empfangen, unterschiedlichen Druckvorrichtungen (30) mit jeweils mindestens einem digitalen Drucckopf, insbesondere einem Inkjet-Druckkopf, welcher ausgebildet ist, mindestens eine Druckdatei für einen Druckauftrag zu empfangen und zu drucken, und einem ersten Rasterbild-Prozessormodul (21), welches auf dem Datenserver (20) vorgesehen ist und ausgebildet ist, die empfangenen Bilddaten des Druckauftrags als ein umgewandeltes Dateiformat bereitzustellen, welches von den Druckvorrichtungen (30) lesbar und in Form des digitalen Druckbildes verarbeitbar ist, wobei die Bilddaten in dem umgewandelten Dateiformat auf die Druckvorrichtungen (30) übermittelbar sind,
**dadurch gekennzeichnet,**
**dass** jede der unterschiedlichen Druckvorrichtungen (30) jeweils ein zweites, an die jeweilige Druckvorrichtung angepasstes Rasterbild-Prozessormodul (31) aufweist, welches jeweils ausgebildet ist, die Bilddaten in dem umgewandelten Dateiformat vor dem Drucken des entsprechenden digitalen Druckbilds druckerspezifisch anzupassen und
**dass** die Druckvorrichtungen (30) Wiedergabemittel (33) aufweisen, welche ausgebildet sind, die übermittelten Bilddaten in dem umgewandelten Dateiformat grafisch und/oder numerisch als vorläufiges zu erwartendes Druckbild darzustellen.

2. Drucksystem nach Anspruch 1 ,
**dadurch gekennzeichnet,**
**dass** die Druckvorrichtungen (30) Eingabemittel (32) für einen Benutzer und Verarbeitungsmittel aufweisen, mittels welchen mindestens ein Befehl an das zweite Rasterbild-Prozessormodul (31) zur druckerspezifischen Anpassung der übermittelten Bilddaten eingebbar und übermittelbar ist.

3. Drucksystem nach Anspruch 2,
**dadurch gekennzeichnet,**
**dass** die Wiedergabemittel (33) ausgebildet sind, vor Ausführung des mindestens einen Befehls zur druckerspezifischen Anpassung der übermittelten Bilddaten das nach der Anpassung zu erwartende Druckbild darzustellen.

4. Drucksystem nach einem der Ansprüche 2 oder 3,
**dadurch gekennzeichnet,**
**dass** das zweite Rasterbild-Prozessormodul (31) ausgebildet ist, basierend auf den übermittelten Befehlen einen Kontrast, eine Helligkeit, eine Bildschärfe, eine Rasterung, eine Auflösung, eine Dimensionierung des zu druckenden Druckbildes, ein Trapping, eine Farbtrennung und/oder eine Open-Prepress-Interface-Bildsetzung der übermittelten Bilddaten anzupassen.

5. Drucksystem nach einem der Ansprüche 1 bis 4,
**dadurch gekennzeichnet,**
**dass** die Druckvorrichtungen (30) ausgebildet sind, die durch das zweite Rasterbild-Prozessormodul (31) angepassten Bilddaten zu drucken.

6. Drucksystem nach einem der Ansprüche 1 bis 5,
**dadurch gekennzeichnet,**
**dass** das zweite Rasterbild-Prozessormodul (31) ausgebildet ist, vordem Anpassen der übermittelten Bilddaten diese in ein anpassbares Dateiformat umzuwandeln.

7. Verfahren zum Erstellen eines digitalen Druckbildes, insbesondere auf einem Textil, bei welchem
Bilddaten für einen Druckauftrag über ein Netzwerk, das Internet, von einem externen Speichermedium oder in Form eines direkt am Datenserver erstellten Druckauftrags an einen Datenserver (20) gesendet werden,
die gesendeten Bilddaten mittels eines ersten Rasterbild-Prozessormoduls (21) in ein Datenformat umgewandelt werden, welches von unterschiedlichen Druckvorrichtungen (30) mit jeweils mindestens einem digitalen Druckkopf, insbesondere einem Inkjet-Druckkopf, lesbar und in Form des digitalen Druckbildes verarbeitbar ist, und die Bilddaten in dem umgewandelten Dateiformat an die Druckvorrichtungen (30) übermittelt werden,
**dadurch gekennzeichnet,**
**dass** die an die Druckvorrichtungen (30) übermittelten, umgewandelten Bilddaten an den Druckvorrichtungen (30) mittels eines zweiten, an die jeweilige Druckvorrichtung angepassten Rasterbild-Prozessormoduls (31) vordem Drucken des entsprechenden digitalen Druckbilds druckerspezifisch angepasst werden und
**dass** an den Druckvorrichtungen (30) Wiedergabemittel (33) vorgesehen sind, mittels welchen die übermittelten Bilddaten in dem umgewandelten Dateiformat grafisch und/oder numerisch als vorläufiges zu erwartendes Druckbild dargestellt werden.

8. Verfahren nach Anspruch 7,
**dadurch gekennzeichnet,**
**dass** mindestens ein Befehl an das zweite Rasterbild-Prozessormodul (31) zur druckerspezifischen Anpassung der übermittelten Bilddaten über Eingabemittel (32) für einen Benutzer eingegeben und über Verarbeitungsmittel übermittelt werden.

9. Verfahren nach Anspruch 8,
**dadurch gekennzeichnet,**
**dass** mittels der Wiedergabemittel (33), vor Ausführung der Befehle zur druckerspezifischen Anpassung der übermittelten Bilddaten das nach der Anpassung zu erwartende Druckbild dargestellt wird.

10. Verfahren nach einem der Ansprüche 8 oder 9,
**dadurch gekennzeichnet,**
**dass** ein Kontrast, eine Helligkeit, eine Bildschärfe, eine Rasterung, eine Auflösung, eine Dimensionierung des zu druckenden Druckbildes, ein Trapping, eine Farbtrennung und/oder eine Open-Prepress-Interface-Bildsetzung der übermittelten Bilddaten basierend auf den übermittelten Befehlen durch das zweite Rasterbild-Prozessormodul angepasst wird.

11. Verfahren nach einem der Ansprüche 7 bis 10,
**dadurch gekennzeichnet,**
**dass** die angepassten Bilddaten durch den mindestens einen Druckkopf der Druckvorrichtungen (30) zu einem Druckbild umgesetzt werden.

12. Verfahren nach einem der Ansprüche 7 bis 11,
**dadurch gekennzeichnet,**
**dass** vor dem Anpassen der übermittelten Bilddaten diese, vorzugsweise durch das zweite Rasterbild-Prozessormodul (31), an den Druckvorrichtungen (30) in ein anpassbares Dateiformat umgewandelt werden.

## Claims

1. Printing system (10) for producing a digital printed image, in particular on a textile, having
a data server (20) which is designed to receive image data of a print order via a network, the internet, from an external storage medium or in the form of a print order directly produced on the data server,
different printing apparatuses (30) with respectively at least one digital print head, in particular an inkjet print head, which is designed to receive and print at least one print file for a print order, and
a first raster image processor module (21) which is provided on the data server (20) and designed to make available the received image data of the print order as a converted file format that can be read and processed in the form of the digital printed image by the printing apparatuses (30), wherein the image data in the converted file format can be transmitted to the printing apparatuses (30),
**characterized in that**
each of the printing apparatuses (30) in each case has a second raster image processor module (31) which is adapted to the respective printing apparatus and designed in each case to adapt the image data in the converted file format in a printer-specific manner prior to the printing of the corresponding digital printed image and **in that** the printing apparatuses (30) have reproduction means (33) which are designed to display graphically and/or numerically the transmitted image data in the converted file format as a preliminary printed image to be expected.

2. Printing system according to claim 1,
**characterized in that**
the printing apparatuses (30) have input means (32) for a user and processing means, by means of which at least one command can be entered and transmitted to the second raster image processor module (31) for the printer-specific adaptation of the transmitted image data.

3. Printing system according to claim 2,
**characterized in that**
prior to the execution of the at least one command for the printer-specific adaptation of the transmitted image data the reproduction means (33) are designed to display the printed image to be expected after the adaptation.

4. Printing system according to any one of claims 2 or 3,
**characterized in that**
based on the transmitted commands the second raster image processor module (31) is designed to adapt a contrast, a brightness, an image sharpness, a rasterization, a resolution, a dimensioning of the printed image to be printed, a trapping, a color separation and/or an open-prepress-interface image setting of the transmitted image data.

5. Printing system according to any one of claims 1 to 4,
**characterized in that**
the printing apparatuses (30) are designed to print the image data adapted by the second raster image processor module (31).

6. Printing system according to any one of claims 1 to 5,
**characterized in that**
prior to the adaptation of the transmitted image data the second raster image processor module (31) is designed to convert these into an adaptable file format.

7. Method for producing a digital printed image, in particular on a textile, in which image data for a print order are sent to a data server (20) via a network, the internet, from an external storage medium or in the form of a print order directly produced on the data server,
by means of a first raster image processor module (21) the sent image data are converted into a data format which can be read and processed in the form of the digital printed image by different printing apparatuses (30) having respectively at least one digital print head, in particular an inkjet print head, and in which the image data in the converted file format are transmitted to the printing apparatuses (30),
**characterized in that**
by means of a second raster image processor module (31), which is adapted to the respective printing apparatus, the converted image data transmitted to the printing apparatuses (30) are adapted in a printer-specific manner on the printing apparatuses (30) prior to the printing of the corresponding digital printed image and
**in that** on the printing apparatuses (30) reproduction means (33) are provided, by means of which the transmitted image data in the converted file format are displayed graphically and/or numerically as a preliminary printed image to be expected.

8. Method according to claim 7,
**characterized in that**
at least one command to the second raster image processor module (31) for the printer-specific adaptation of the transmitted image data is entered via input means (32) for a user and transmitted via processing means.

9. Method according to claim 8,
**characterized in that**
prior to the execution of the commands for the printer-specific adaptation of the transmitted image data the printed image to be expected after the adaptation is displayed by means of the reproduction means (33).

10. Method according to any one of claims 8 or 9,
**characterized in that**
based on the transmitted commands a contrast, a brightness, an image sharpness, a rasterization, a resolution, a dimensioning of the printed image to be printed, a trapping, a color separation and/or an open-prepress-interface image setting of the transmitted image data is adapted by the second raster image processor module.

11. Method according to any one of claims 7 to 10,
**characterized in that**
the adapted image data are transformed by the at least one print head of the printing apparatuses (30) into a printed image.

12. Method according to any one of claims 7 to 11,
**characterized in that**
prior to the adaptation of the transmitted image data these are converted on the printing apparatuses (30), preferably by the second raster image processor module (31), into an adaptable file format.

## Revendications

1. Système d'impression (10) pour la génération d'une image d'impression numérique, en particulier sur un textile, avec
un serveur de données (20) qui est configuré afin de recevoir des données d'image d'une tâche d'impression par le biais d'un réseau, de l'internet, d'un support de stockage externe ou sous la forme d'une tâche d'impression générée directement au niveau du serveur de données,
différents dispositifs d'impression (30) avec respectivement au moins une tête d'impression numérique, en particulier une tête d'impression à jet d'encre, qui est configurée afin de recevoir et d'imprimer au moins un fichier d'impression pour une tâche d'impression, et
un premier module de processeur d'image matricielle (21) qui est prévu et est configuré sur le serveur de données (20) afin de mettre à disposition les données d'image reçues de la tâche d'impression sous la forme d'un format de fichier converti qui peut être lu par les dispositifs d'impression (30) et peut être traité sous la forme de l'image d'impression numérique, dans lequel les données d'image peuvent être transmises dans le format de fichier converti sur les dispositifs d'impression (30), caractérisé en ce e
chacun des différents dispositifs d'impression (30) présente respectivement un second module de processeur d'image matricielle (31) adapté au dispositif d'impression respectif qui est configuré respectivement afin d'adapter les données d'image dans le format de fichier converti avant l'impression de l'image d'impression numérique correspondante de manière spécifique à l'imprimante et
en ce que les dispositifs d'impression (30) présentent des moyens de reproduction (33) qui sont configurés afin de représenter les données d'image transmises dans le format de fichier converti de manière graphique et/ou numérique comme image d'impression provisoire à attendre.

2. Système d'impression selon la revendication 1,
**caractérisé en ce que**
les dispositifs d'impression (30) présentent des moyens de saisie (32) pour un utilisateur et des moyens de traitement, au moyen desquels au moins un ordre peut être saisi et transmis au second module de processeur d'image matricielle (31) pour l'adaptation spécifique à l'imprimante des données d'image transmises.

3. Système d'impression selon la revendication 2,
**caractérisé en ce que**
les moyens de reproduction (33) sont configurés afin de représenter l'image d'impression à attendre après l'adaptation avant la réalisation de l'au moins un ordre pour l'adaptation spécifique à l'imprimante des données d'image transmises.

4. Système d'impression selon l'une des revendications 2 ou 3,
**caractérisé en ce que**
le second module de processeur d'image matricielle (31) est configuré afin d'adapter sur la base des ordres transmis un contraste, une luminosité, une netteté d'image, un tramage, une définition, un dimensionnement de l'image d'impression à imprimer, une capture, une séparation de couleur et/ou une conversion d'image à interface de prépresse ouverte des données d'image transmises.

5. Système d'impression selon l'une des revendications 1 à 4,
**caractérisé en ce que**
les dispositifs d'impression (30) sont configurés afin d'imprimer les données d'image adaptées par le second module de processeur d'image matricielle (31).

6. Système d'impression selon l'une des revendications 1 à 5,
**caractérisé en ce que**
le second module de processeur d'image matricielle (31) est configuré afin de convertir avant l'adaptation des données d'image transmises celles-ci dans un format de fichier adaptable.

7. Procédé de génération d'une image d'impression numérique, en particulier sur un textile, pour lequel
des données d'image pour une tâche d'impression sont envoyées par le biais d'un réseau, de l'internet, d'un support de stockage externe ou sous la forme d'une tâche d'impression créée directement au niveau du serveur de données à un serveur de données (20),
les données d'image envoyées sont converties au moyen d'un premier module de processeur d'image matricielle (21) dans un format de données qui peut être lu par différents dispositifs d'impression (30) avec respectivement au moins une tête d'impression numérique, en particulier une tête d'impression à jet d'encre et peut être traité sous la forme de l'image d'impression numérique, et
les données d'image dans le format de fichier converti sont transmises aux dispositifs d'impression (30),
**caractérisé en ce que**
les données d'image converties transmises aux dispositifs d'impression (30) sont adaptées aux dispositifs d'impression (30) au moyen d'un second module de processeur d'image matricielle (31) adapté au dispositif d'impression respectif avant l'impression de l'image d'impression numérique correspondante de manière spécifique à l'imprimante et
**en ce que** des moyens de reproduction (33) sont prévus au niveau des dispositifs d'impression (30), au moyen desquels les données d'image transmises sont représentées dans le format de fichier converti de manière graphique et/ou numérique comme image d'impression provisoire à attendre.

8. Procédé selon la revendication 7,
**caractérisé en ce que**
au moins un ordre est saisi et transmis par le biais de moyens de traitement au second module de processeur d'image matricielle (31) pour l'adaptation spécifique à l'imprimante des données d'image transmises par le biais de moyens de saisie (32) pour un utilisateur.

9. Procédé selon la revendication 8,
**caractérisé en ce que**
l'image d'impression à attendre après l'adaptation est représentée au moyen des moyens de reproduction (33), avant la réalisation des ordres pour l'adaptation spécifique à l'imprimante des données d'image transmises.

10. Procédé selon l'une des revendications 8 ou 9,
**caractérisé en ce que**
un contraste, une luminosité, une netteté d'image, un tramage, une définition, un dimensionnement de l'image d'impression à imprimer, une capture, une séparation de couleur et/ou une conversion d'image à interface de prépresse ouverte des données d'image transmises est adapté sur la base des ordres transmis par le second module de processeur d'image matricielle.

11. Procédé selon l'une des revendications 7 à 10,
**caractérisé en ce que**
les données d'image adaptées sont converties par l'au moins une tête d'impression des dispositifs d'impression (30) en une image d'impression.

12. Procédé selon l'une des revendications 7 à 11,
**caractérisé en ce que**
avant l'adaptation des données d'image transmises celles-ci sont converties de préférence par le second module de processeur d'image matricielle (31) au niveau des dispositifs d'impression (30) dans un format de fichier adaptable.
